(19) **Europäisches Patentamt European Patent Office Office européen des brevets**

(11) **EP 2 597 956 B1**

(12) **EUROPEAN PATENT SPECIFICATION**

(45) Date of publication and mention of the grant of the patent:
**10.09.2014 Bulletin 2014/37**

(21) Application number: **11746356.2**

(22) Date of filing: **27.07.2011**

(51) Int Cl.:
*A01N 43/90* (2006.01)          *A01N 47/36* (2006.01)
*A01N 25/00* (2006.01)          *A01P 13/00* (2006.01)

(86) International application number:
**PCT/US2011/045439**

(87) International publication number:
**WO 2012/015854 (02.02.2012 Gazette 2012/05)**

(54) **SYNERGISTIC HERBICIDAL COMPOSITIONS CONTAINING PYROXSULAM AND SULFOSULFURON**

SYNERGISTISCHE HERBIZIDE ZUSAMMENSETZUNGEN MIT PYROXSULAM UND SULFOSULFURON

COMPOSITIONS HERBICIDES SYNERGIQUES CONTENANT DU PYROXSULAM ET DU SULFOSULFURON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.07.2010 US 368089 P**

(43) Date of publication of application:
**05.06.2013 Bulletin 2013/23**

(73) Proprietor: **Dow AgroSciences LLC Indianapolis, IN 46268 (US)**

(72) Inventors:
• **YADAV, Mayank New Delhi 110037 (IN)**
• **RAMACHANDRAN, Suresh Thane 400601 (IN)**
• **GAST, Roger Zionsville, IN 46077 (US)**

(74) Representative: **f & e patent Fleischer, Engels & Partner mbB, Patentanwälte Braunsberger Feld 29 51429 Bergisch Gladbach (DE)**

(56) References cited:
**WO-A1-2004/080184      WO-A2-96/19110 WO-A2-2004/080171**

• **DATABASE CAPLUS, [Online] 13 April 2007 (2007-04-13), JADHAV PRAKASH MAHADEV ET AL: "chemically-stable synergistic herbicide composition", XP002535689, retrieved from CAPLUS Database accession no. 2007-441900**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention concerns a synergistic herbicidal composition containing (a) pyroxsulam and (b) sulfosulfuron.

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In some cases, herbicidal active ingredients have been shown to be more effective in combination than when applied individually and this is referred to as "synergism." As described in the Herbicide Handbook of the Weed Science Society of America, Ninth Edition, 2007, p. 429, "'synergism' [is] an interaction of two or more factors such that the effect when combined is greater than the predicted effect based on the response to each factor applied separately." The present invention is based on the discovery that (a) pyroxsulam and (b) sulfosulfuron, already known individually for their herbicidal efficacy, display a synergistic effect when applied in combination

Pyroxsulam, *N*-(5,7-dimethoxy[1,2,4]triazolo[1,5-a]pyrimidin-2-yl)-2-methoxy-4-(trifluoromethyl)-3-pyridinesulfonamide, is a triazolopyrimidine sulfonamide herbicide, and its herbicidal activity is described in The Pesticide Manual, Fifteenth Edition, 2009. Pyroxsulam provides broad spectrum post emergence annual grass and broadleaf weed control in cereals. A series of synergistic herbicidal compositions comprising pyroxsulam and a further herbicide are disclosed in WO 2004/080171.

Sulfosulfuron is the common name for *N*-[[(4,6-dimethoxy-2-pyrimidinyl)amino]-carbonyl]-2-(ethylsulfonyl)imidazo[1,2-*a*]pyridine-3-sulfonamide. It is a pyrimidinyl-sulfonylurea herbicide, and its herbicidal activity is described in The Pesticide Manual, Fifteenth Edition, 2009. Sulfosulfuron controls both annual broadleaf and grass weeds in cereals, especially wheat.

The present invention concerns a synergistic herbicidal mixture comprising an herbicidally effective amount of (a) pyroxsulam and (b) sulfosulfuron. The compositions may also contain an agriculturally acceptable adjuvant or carrier.

The present invention also concerns a method of controlling the growth of undesirable weeds, particularly in wheat, and the use of this synergistic composition.

The species spectrum of the compounds of the synergistic mixture, i.e., the weed species which the respective compounds control, is broad and highly complementary. These synergistic mixtures are particularly useful for the control of key weeds, e.g., little seed canary grass (*Phalaris minor* L.; PHAMI) at application rates lower than the rates of the individual compounds.

The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include germinant seeds, emerging seedlings and established vegetation.

Herbicidal activity is exhibited by the compounds of the synergistic mixture when they are applied to the foliage or seed or locus of the plant before or after planting or emergence. The effect observed depends upon the plant species to be controlled, the application parameters of dilution, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action. Generally, it is preferred to apply the composition of the present invention postemergence, after emergence of the weeds to achieve the maximum control of weeds.

In the composition of this invention, the weight ratio of pyroxsulam to sulfosulfuron at which the herbicidal effect is synergistic lies within the range of between 2:1 and 1:2.

The rate at which the synergistic composition is applied will depend upon the particular type of weed to be controlled, the degree of control required, and the timing and method of application. In general, the composition of the invention can be applied at an application rate of between 15 grams active ingredient per hectare (g ai/ha) and 50 g ai/ha based on the total amount of active ingredients in the composition. Pyroxsulam is applied at a rate between 7.5 g ai/ha and 25 g ai/ha whereas sulfosulfuron is applied at a rate between 7.5 g ai/ha and 25 g ai/ha

The components of the synergistic mixture of the present invention can be applied either separately or as part of a multipart herbicidal system.

The synergistic mixture of the present invention can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic composition of the present invention include: 2,4-D esters and amines, 2,4-MCPA, amidosulfuron, beflubutamid, benazolin, bentazone, bifenox, bromoxynil, butachlor, butafenacil, carfentrazone-ethyl, chlormequat, chlortoluron, cinidon-ethyl, clodinafop-propargyl, clopyralid, cyanazine, cyclosulfamuron, dicamba, diclofop-methyl, diflufenican, diflufenzopyr, dimefuron, diuron, ethoxysulfuron, fenoxaprop, fenoxaprop-ethyl, fenoxaprop-ethyl + isoxadifen-ethyl, fenoxaprop-p-ethyl, florasulam, flucarbazone, flucetosulfuron (LGC-421530), flufenacet, flumetsulam, flupyrsulfuron, flurtamone, imazamethabenz, imazamox, imazapic, imazapyr, imazaquin, imazethapyr, imazosulfuron, indanofan, iodosulfuron, iodosulfuron-ethyl-sodium, ioxynil, isoproturon, isoxaben, lactofen, linuron, MCPA, mecoprop-P, mesosulfuron, mesosulfuron-ethyl sodium, metosulam, metribuzin, metsulfuron, metsulfuron-methyl, orthosulfamuron, oxyfluorfen, pendimethalin, penoxsulam, picolinafen, pinoxaden, primisulfuron, profluazol, propoxycarbazone, prosulfocarb, prosulfuron, pyraflufen ethyl, pyribenzoxim (LGC-40863), pyroxasulfone, quinmerac, thifensulfuron, thifensulfuron-methyl, topramezone, tralkoxydim, triasulfuron, tribenuron and tribenuron-methyl.

The composition of the present invention can additionally be employed to control undesirable vegetation in many crops that have been made tolerant to or resistant to them or to other herbicides by genetic manipulation or by mutation and selection. Thus, the composition of the present invention can be used on 2,4-D tolerant crops. The herbicidal composition of the present invention can, further, be used in conjunction with glyphosate, glufosinate, dicamba or imidazolinones on glyphosate-tolerant, glufosinate-tolerant, dicamba-tolerant or imidazolinone-tolerant crops. It is generally preferred to use the composition of the invention in combination with herbicides that are selective for the crop being treated and which complement the spectrum of weeds controlled by these compounds at the application rate employed. It is further generally preferred to apply the composition of the invention and other complementary herbicides at the same time, either as a combination formulation or as a tank mix. Similarly the herbicidal composition of the present invention can be used in conjunction with acetolactate synthase inhibitors on acetolactate synthase inhibitor-tolerant crops.

The synergistic composition of the present invention can generally be employed in combination with known herbicide safeners, such as benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, isoxadifen-ethyl, mefenpyr-diethyl, MG 191, MON 4660, naphthalic anhydride (NA), oxabetrinil, R29148 and *N*-phenylsulfonylbenzoic acid amides, to enhance their selectivity.

While it is possible to utilize the synergistic mixture of the present invention directly as herbicides, it is preferable to use them in mixtures containing a herbicidally effective amount of the compound along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with the compounds of the synergistic mixture or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, or wettable powders, or liquids, such as, for example, emulsifiable concentrates, solutions, emulsions or suspensions. They can also be provided as a pre-mix or tank mixed.

Suitable agricultural adjuvants and carriers that are useful in preparing the herbicidal mixtures of the invention are well known to those skilled in the art. Some of these adjuvants include, but are not limited to, crop oil concentrate (mineral oil (85%) + emulsifiers (15%)); nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-sec-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents typically used include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like. Specific organic solvents include toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N,N*-dimethyl alkylamides, dimethyl sulfoxide, liquid fertilizers and the like. Water is generally the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, and the like.

It is usually desirable to incorporate one or more surface-active agents into the compositions of the present invention. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Surfactants conventionally used in the art of formulation and which may also be used in the present formulations are described, *inter alia,* in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils.

Other additives commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like, and can be formulated with liquid fertilizers or solid, particulate fertilizer carriers such as ammonium nitrate, urea and the like.

The concentration of the active ingredients in the synergistic composition of the present invention is generally from 0.001 to 98 percent by weight. Concentrations from 5 to 90 percent by weight are often employed. In compositions designed to be employed as concentrates, the active ingredients are generally present in a concentration from 5 to 98 weight percent, preferably 5 to 90 weight percent. Such compositions are typically diluted with an inert carrier, such as water, before application. The diluted compositions usually applied to weeds or the locus of weeds generally contain 0.0001 to 1 weight percent active ingredient and preferably contain 0.001 to 0.1 weight percent.

The present compositions can be applied to weeds or their locus by the use of conventional ground or aerial dusters, sprayers, and granule applicators, by addition to irrigation water, and by other conventional means known to those skilled in the art.

Field trials were located in Haryana (India) and conducted under normal wheat crop conditions. The wheat crop was grown using normal cultural practices for fertilization, seeding, and maintenance to ensure good growth of the crop and the weeds. The trials were conducted using normal research methodology. Trial plots were between 3.5 to 5 meters (m) wide by 10 m long. All treatments were applied using a randomized complete block trial design with 3 replications per treatment. The trial sites had naturally occurring populations of weeds. The weed spectrum included, but was not limited to, little seed canary grass *(Phalaris minor,* PHAMI). Treatments consisted of tank mixes of pyroxsulam and sulfosulfuron applied in water using a hand pump backpack sprayer fitted with flood jet nozzle and a spray volume of 300 liters per hectare (L/ha). Polyglycol 26-2 Neutralized was added as adjuvant @ 0.75 L/ha. Treatments were applied at 34 to 39 days after sowing in different trials targeting BBCH 12-15 of PHAMI.

The treated plots and control plots were observed for weed count (Number per square meter) at different intervals after application using a quadrat. Data on weed count was subjected to transformation using Abbot method (% of untreated).

Colby's equation was used to determine the herbicidal effects expected from the mixtures (Colby, S.R. Weeds 1967, 15, 20-22. Calculation of the synergistic and antagonistic response of herbicide combinations.).

The following equation was used to calculate the expected activity of mixtures containing two active ingredients, A and B:

$$\text{Expected} = A + B - (A \times B/100)$$

A = observed efficacy of active ingredient A at the same concentration as used in the mixture.

B = observed efficacy of active ingredient B at the same concentration as used in the mixture.

The herbicide tank mix combinations tested, application rates, plant species tested, and results are given in Table 1.

Table 1. Synergistic PHAMI control following postemergence application of pyroxsulam and sulfosulfuron.

| Pyroxsulam | Sulfosulfuron | % PHAMI Control | | | | | |
|---|---|---|---|---|---|---|---|
| | | Experiment 01 | | Experiment 02 | | Experiment 13 | |
| Rate (g ai/ha) | | Obs | *Exp* | Obs | *Exp* | Obs | *Exp* |
| 18 | ----- | 34.8 | ----- | 61.5 | ----- | 46.4 | ----- |
| ----- | 18 | 36.8 | ----- | 52.9 | ----- | 47.9 | ----- |
| 18 | 18 | 81.2 | 58.7 | 98.2 | 81.9 | 86.2 | 72.1 |
| Difference in Obs vs. Exp | | *+22.5* | | *+16.3* | | *+14.1* | |
| PHAMI - Little seed canarygrass *(Phalaris minor)* <br> g ai/ha - grams of active ingredient per hectare <br> Obs - Percent control observed <br> Exp - Percent control expected by Colby equation | | | | | | | |

**Claims**

1. A synergistic herbicidal mixture comprising an herbicidally effective amount of (a) pyroxsulam and (b) sulfosulfuron.

2. The synergistic herbicidal mixture of Claim 1 in which the weight ratio of pyroxsulam to sulfosulfuron is between 2:1 and 1:2.

3. An herbicidal composition comprising an herbicidally effective amount of the synergistic herbicidal mixture of Claim 1 and an agriculturally acceptable adjuvant or carrier.

4. A method of controlling undesirable vegetation which comprises contacting the foliage or seed or the locus thereof before or after planting or emergence with an herbicidally effective amount the synergistic herbicidal mixture of Claim 1.

5. A method of controlling undesirable vegetation in cereals which comprises postemergently contacting foliage of the weeds with an herbicidally effective amount the synergistic herbicidal mixture of Claim 1.

**Patentansprüche**

1. Eine synergistische herbizide Mischung umfassend eine herbizid wirksame Menge von (a) Pyroxsulam und (b) Sulfosulfuron.

2. Die synergistische herbizide Mischung gemäß Anspruch 1, in welcher das Gewichtsverhältnis von Pyroxsulam zu Sulfosulfuron zwischen 2:1 und 1:2 ist.

3. Eine herbizide Zusammensetzung umfassend eine herbizid wirksame Menge der synergistischen herbiziden Mischung gemäß Anspruch 1 und einen landwirtschaftlich akzeptablen Hilfsstoff oder Träger.

4. Ein Verfahren zum Unter-Kontrolle-Halten unerwünschter Vegetation, welches das In-Kontakt-Bringen der Blätter oder des Samens oder des Ortes derselben mit einer herbizid wirksamen Menge der synergistischen herbiziden Mischung gemäß Anspruch 1 vor oder nach dem Pflanzen oder Entstehen umfasst.

5. Ein Verfahren zum Unter-Kontrolle-Halten unerwünschter Vegetation in Getreide, welches das In-Kontakt-Bringen der Blätter des Unkrauts nach dem Entstehen mit einer herbizid wirksamen Menge der synergistischen herbiziden Mischung gemäß Anspruch 1 umfasst.

**Revendications**

1. Mélange herbicide synergique comprenant une quantité à effet herbicide de (a) pyroxsulame et (b) sulfosulfuron.

2. Mélange herbicide synergique selon la revendication 1, dans lequel le rapport pondéral du pyroxsulame au sulfosulfuron est compris entre 2:1 et 1:2.

3. Composition herbicide comprenant une quantité à effet herbicide du mélange herbicide synergique selon la revendication 1 et un adjuvant ou une matière de support acceptable en agriculture.

4. Procédé de lutte contre des végétaux indésirables, comprenant la mise en contact des feuilles ou des semences ou de leur habitat, avant ou après plantation ou levée, avec une quantité à effet herbicide du mélange herbicide synergique selon la revendication 1.

5. Procédé de lutte contre des végétaux indésirables dans des cultures de céréales, comprenant la mise en contact post-levée des feuilles des adventices avec une quantité à effet herbicide du mélange herbicide synergique selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004080171 A

**Non-patent literature cited in the description**

- Herbicide Handbook. Weed Science Society of America, 2007, 429
- The Pesticide Manual. 2009
- McCutcheon's Detergents and Emulsifiers Annual. MC Publishing Corp, 1998
- Encyclopedia of Surfactants. Chemical Publishing Co, 1980, vol. I-III, 81
- **COLBY, S.R.** *Weeds,* 1967, vol. 15, 20-22